# EUROPEAN PATENT APPLICATION

(11) **EP 4 818 768 A1**
(43) Date of publication of application: **07.10.2026**
(21) Application number: 24895930.6
(22) Date of filing: 20.09.2024
(51) Int. Cl.: G02B 3/14

(54) **OPTICAL DEVICE, LENS, AND LENS ADJUSTING SYSTEM**

(30) Priority: 30.11.2023 CN 202323273897 U
(71) Applicant: BYD Company Limited, Shenzhen, Guangdong 518118 (CN)
(72) Inventor: GONG, Qing, Shenzhen, Guangdong 518118 (CN); SUN, Yaxuan, Shenzhen, Guangdong 518118 (CN); SONG, Yi, Shenzhen, Guangdong 518118 (CN); WANG, Baoqing, Shenzhen, Guangdong 518118 (CN); LIU, Yan, Shenzhen, Guangdong 518118 (CN)
(74) Representative: Taor, Simon Edward William
(86) International application number: PCT/CN2024/120212
(87) International publication number: WO 2025/112832

(57) **Abstract**

Disclosed are an optical apparatus, a lens, and a lens adjustment system. The optical apparatus includes a deformable light-transmitting membrane, a housing, and a light-transmitting structure disposed on the housing. The deformable light-transmitting membrane, the housing, and the light-transmitting structure form at least two chambers suitable for containing liquid, and the deformable light-transmitting membrane is disposed between two adjacent chambers. The light-transmitting structure and the deformable light-transmitting membrane jointly form an optical path for light to pass through. Two adjacent chambers are suitable for containing liquids with different refractive indices. Each chamber is provided with at least one through hole, and the through hole is suitable for being in communication with a control structure to change an amount of liquid in the chamber.

## Description

### CROSS-REFERENCE TO RELATED APPLICATIONS

The present disclosure claims priority to Chinese Patent Application No. 202323273897.9, filed with the Chinese Patent Office on November 30, 2023 and entitled "OPTICAL APPARATUS, LENS, AND LENS ADJUSTMENT SYSTEM", which is incorporated herein by reference in its entirety.

### TECHNICAL FIELD

The present disclosure relates to the field of optical lens technologies, and specifically, to an optical apparatus, a lens, and a lens adjustment system.

### BACKGROUND

In related technologies, a liquid lens usually includes a liquid medium that is placed in a reservoir and encapsulated by an elastic membrane. During use, the liquid lens may need to be moved or flipped based on a use requirement. In this case, the liquid medium flows under the influence of gravity, causing localized deformation of the elastic membrane. This leads to instability of an optical axis of the liquid lens, thereby affecting imaging quality and imaging stability.

### SUMMARY

An objective of the present disclosure is to provide an optical apparatus, a lens, and a lens adjustment system, which can improve stability of an optical axis during use and enable precise focusing, to at least partially resolve the above technical problems.

To achieve the foregoing objective, according to a first aspect of the present disclosure, an optical apparatus is provided. The optical apparatus includes:
a deformable light-transmitting membrane;
a housing; and
a light-transmitting structure disposed on the housing, where the deformable light-transmitting membrane, the housing, and the light-transmitting structure form at least two chambers suitable for containing liquid, the deformable light-transmitting membrane is disposed between two adjacent chambers, the light-transmitting structure and the deformable light-transmitting membrane jointly form an optical path for light to pass through, two adjacent chambers are suitable for containing liquids with different refractive indices, each chamber is provided with at least one through hole, and the through hole is suitable for being in communication with a control structure to change an amount of liquid in the chamber.

Optionally, the at least two chambers are sequentially arranged along a first direction. The light-transmitting structure includes a first light-transmitting portion located at a first end of the housing along the first direction and a second light-transmitting portion located at a second end opposite to the first end. The first direction is perpendicular to the first light-transmitting portion or the second light-transmitting portion, and a central axis of the deformable light-transmitting membrane is parallel to the first direction.

Optionally, the housing includes a first plate body, a second plate body, and a third plate body located between the first plate body and the second plate body. A first sealing member is disposed between the first plate body and the third plate body, and a second sealing member is disposed between the second plate body and the third plate body. One of the chambers is enclosed by the first plate body, the third plate body, and the first sealing member, and another chamber is enclosed by the second plate body, the third plate body, and the second sealing member. The first light-transmitting portion is disposed on the first plate body, the second light-transmitting portion is disposed on the second plate body, and the deformable light-transmitting membrane is disposed on the third plate body. Each of the first sealing member and the second sealing member is provided with at least one through hole.

Optionally, a first light-transmitting hole is provided in the first plate body, and the first light-transmitting portion is constructed as a first optical lens covering the first light-transmitting hole; and/or a second light-transmitting hole is provided in the second plate body, and the second light-transmitting portion is constructed as a second optical lens covering the second light-transmitting hole.

Optionally, a radial dimension of the first light-transmitting hole and/or the second light-transmitting hole is not less than 30 mm.

Optionally, a length of at least one of the first sealing member and the second sealing member along the first direction is not less than one-fifth of a diameter of the deformable light-transmitting membrane.

Optionally, the first plate body and the second plate body are connected via a connection assembly, so that the third plate body, the first sealing member, and the second sealing member are capable of being clamped between the first plate body and the second plate body.

Optionally, the connection assembly includes a plurality of clamping members spaced circumferentially about the first plate body or the second plate body, the clamping members are connected to both the first plate body and the second plate body, and the clamping members optionally penetrate the third plate body.

Optionally, the through hole is provided in the housing.

According to a second aspect of the present disclosure, a lens is provided. The lens includes the foregoing optical apparatus and liquid filled in the chambers.

Optionally, the liquid in each of the chambers has a same density.

According to a third aspect of the present disclosure, a lens adjustment system is provided. The lens adjustment system includes the foregoing lens and the control structure.

Optionally, the control structure includes a liquid amount control assembly and a pressure detection assembly that are in communication with each of the chambers. The liquid amount control assembly is configured to adjust an amount of liquid in each of the chambers, to adjust a radius of curvature of the deformable light-transmitting membrane. The pressure detection assembly is configured to detect a pressure in each of the chambers for the liquid amount control assembly to adjust the amount of liquid in each of the chambers.

Optionally, the liquid amount control assembly includes a liquid flow line and a pumping apparatus. Each of the chambers is in communication with a respective liquid flow line, and each of the liquid flow lines is in communication with a respective pumping apparatus, or each of the liquid flow lines is in communication with the same pumping apparatus.

Optionally, each of the chambers is in communication with a respective vent line. The pressure detection assembly includes a plurality of pressure detection apparatuses, and the pressure detection apparatus is disposed on the vent line or the liquid flow line.

Optionally, a vent valve is disposed on the vent line.

According to the foregoing technical solution, liquid may be arranged on both sides of the deformable light-transmitting membrane, so that the two liquids can mutually restrain and support each other, to reduce a degree of localized deformation of an elastic membrane caused by the influence of gravity as in related technologies, thereby improving stability of an optical axis. Consequently, imaging quality and imaging stability are enhanced, and user experience is improved. In addition, the lens can change an amount of liquid on both sides of the deformable light-transmitting membrane via the control structure, to deform the deformable light-transmitting membrane, thereby changing a radius of curvature of the deformable light-transmitting membrane to implement adjustment of a focal length.

Other features and advantages of the present disclosure will be described in detail in the following section of description of embodiments.

### BRIEF DESCRIPTION OF DRAWINGS

The accompanying drawings are intended to provide a further understanding of the present disclosure, constitute a part of this specification, and are used together with the following specific implementations to explain the present disclosure, but do not constitute a limitation on the present disclosure. In the accompanying drawings:
FIG. 1 is a diagram of an overall structure of an optical apparatus according to an example implementation of the present disclosure;
FIG. 2 is an exploded view of a structure of an optical apparatus according to an example implementation of the present disclosure;
FIG. 3 is a diagram of a structure of a deformable light-transmitting membrane in an upward convex state according to an example implementation of the present disclosure;
FIG. 4 is a diagram of a structure of a deformable light-transmitting membrane in a downward concave state according to an example implementation of the present disclosure; and
FIG. 5 is a diagram of a structure of a lens adjustment system according to an example implementation of the present disclosure.

### DESCRIPTION OF EMBODIMENTS

The following describes in detail specific implementations of the present disclosure with reference to accompanying drawings. It should be understood that the specific implementations described herein are merely used to illustrate and explain the present disclosure, but are not intended to limit the present disclosure.

In the present disclosure, for ease of description, a first direction is defined for an optical apparatus, where "X" indicates the first direction. Unless otherwise specified, "inside" and "outside" refer to an interior and an exterior of a contour of a corresponding component; and "far" and "near" refer to a distance of a corresponding component relative to another component in spatial position. In addition, terms such as "first" and "second" used in the present disclosure are intended to distinguish one element from another and do not imply any order or importance. When the following description relates to the accompanying drawings, unless specified otherwise, same numbers in different accompanying drawings represent a same or similar element.

The following describes an optical apparatus, a lens, and a lens adjustment system in example embodiments of the present disclosure with reference to accompanying drawings.

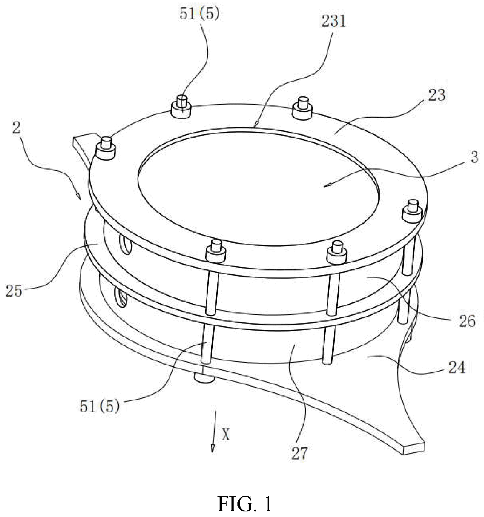

According to the first aspect of the present disclosure, refer to FIG. 1 to FIG. 4. The present disclosure provides an optical apparatus, including a deformable light-transmitting membrane 1, a housing 2, and a light-transmitting structure 3 disposed on the housing 2. The deformable light-transmitting membrane 1, the housing 2, and the light-transmitting structure 3 form at least two chambers 21 suitable for containing liquid. The deformable light-transmitting membrane 1 is disposed between two adjacent chambers 21. The light-transmitting structure 3 and the deformable light-transmitting membrane 1 jointly form an optical path for light to pass through. Two adjacent chambers 21 are suitable for containing liquids with different refractive indices. Each chamber 21 is provided with at least one through hole 22, and the through hole 22 is suitable for being in communication with a control structure 4 to change an amount of liquid in the chamber 21.

According to this technical solution, liquid may be arranged on both sides of the deformable light-transmitting membrane 1, so that the two liquids can mutually restrain and support each other, to reduce a degree of localized deformation of an elastic membrane caused by the influence of gravity as in related technologies, thereby improving stability of an optical axis. Consequently, imaging quality and imaging stability are enhanced, and user experience is improved. In addition, the optical apparatus can change an amount of liquid on both sides of the deformable light-transmitting membrane 1 via the control structure 4, to deform the deformable light-transmitting membrane 1, thereby changing a radius of curvature of the deformable light-transmitting membrane 1 to implement adjustment of a focal length. The deformable light-transmitting membrane 1 has specific elasticity and light transmittance, and may be, for example, a PDMS membrane or a PE membrane. Among liquids suitable for filling two adjacent chambers 21, one liquid may be a transparent oily liquid, for example, silicone oil, germanium oil, dimethyl silicone oil, or an optical fluid, and the other liquid may be a salt solution or an alcohol solution, for example, an aqueous solution of sodium chloride, potassium chloride, sodium sulfate, or the like, or ethylene glycol, propylene glycol, or propylene carbonate. Specifically, the optical apparatus includes the chambers 21 for containing liquid, so that light may pass through the optical path formed by the light-transmitting structure 3 disposed on the housing 2, the liquid contained in each chamber 21, and the deformable light-transmitting membrane 1, and is then converged or diverged. In addition, each chamber 21 is provided with at least one through hole 22 for adjusting an amount of liquid in the chamber 21 via the control structure 4. Because liquid may be filled on both sides of the deformable light-transmitting membrane 1, the deformable light-transmitting membrane 1 can deform uniformly during an adjustment process, thereby changing the radius of curvature of the deformable light-transmitting membrane 1 to implement the adjustment of the focal length, and achieving precise focusing.

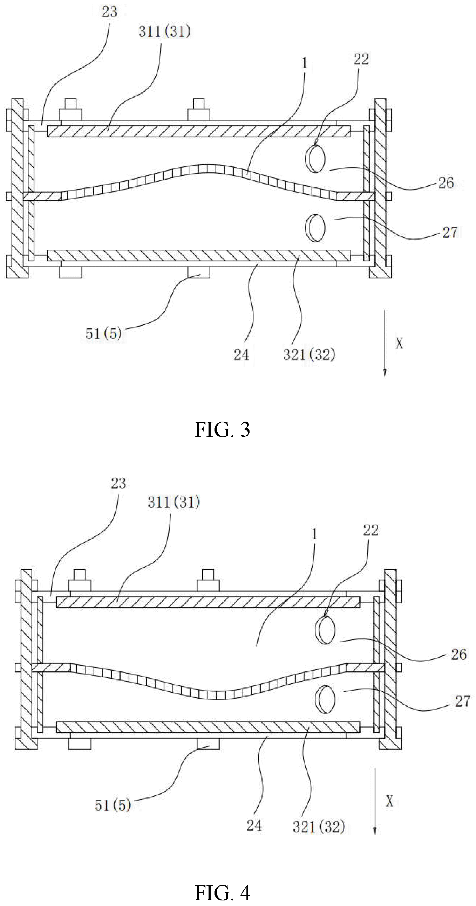

In the present disclosure, for example, two chambers 21 are disposed. When the optical apparatus is filled with liquid to serve as a liquid lens, as shown in FIG. 3, after liquid is added to the lower chamber 21 via the control structure 4 and liquid is reduced from the upper chamber 21 via the control structure 4, the deformable light-transmitting membrane 1 undergoes upward convex deformation to form a positive lens. Light passes from top to bottom sequentially through the upper light-transmitting structure 3, the liquid in the upper chamber 21, the deformable light-transmitting membrane 1, the liquid in the lower chamber 21, and the lower light-transmitting structure 3, and is then converged. In some other embodiments, as shown in FIG. 4, after liquid is added to the upper chamber 21 via the control structure 4 and liquid is reduced from the lower chamber 21 via the control structure 4, the deformable light-transmitting membrane 1 undergoes downward concave deformation to form a negative lens. Light passes from top to bottom sequentially through the upper light-transmitting structure 3, the liquid in the upper chamber 21, the deformable light-transmitting membrane 1, the liquid in the lower chamber 21, and the lower light-transmitting structure 3, and is then diverged. It may be understood that the amount of liquid in each chamber 21 can still be adjusted via the control structure 4 to further deform the deformable light-transmitting membrane 1, thereby changing the radius of curvature of the deformable light-transmitting membrane 1 to implement the adjustment of the focal length.

In addition, in some other possible embodiments not shown in the accompanying drawings, specifically, a plurality of chambers 21 may be disposed, and the deformable light-transmitting membrane 1 is disposed between two adjacent chambers 21. The amount of liquid in each chamber 21 is adjusted via the control structure 4 to cause the deformable light-transmitting membrane 1 to undergo upward convex deformation or downward concave deformation, so that the light is converged or diverged accordingly after passing through the lens. Meanwhile, the amount of liquid in each chamber 21 may be adjusted via the control structure 4, to further deform the deformable light-transmitting membrane 1, thereby changing the radius of curvature of the deformable light-transmitting membrane 1 to achieve a wider range of focal length adjustment, and improving applicability of the lens. This is not limited in the present disclosure.

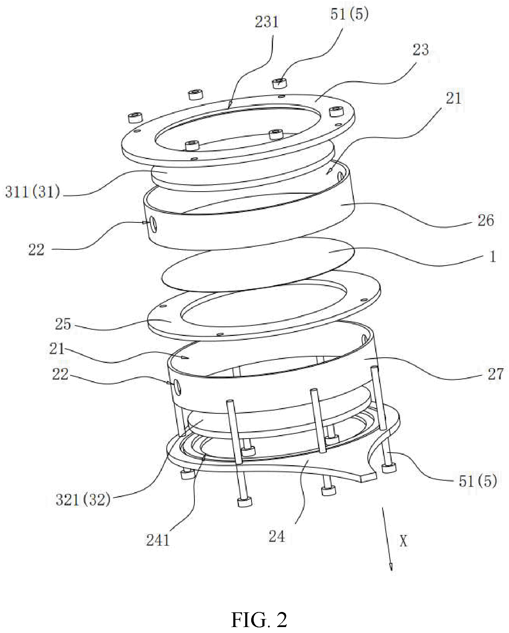

In some embodiments, as shown in FIG. 1 and FIG. 2, the two chambers 21 are sequentially arranged along a first direction. The light-transmitting structure 3 may be configured to cooperate with the chambers 21 and the deformable light-transmitting membrane 1 in any suitable manner. For example, the light-transmitting structure 3 may include a first light-transmitting portion 31 located at a first end of the housing 2 along the first direction and a second light-transmitting portion 32 located at a second end opposite to the first end. In this way, light sequentially passes through the first light-transmitting portion 31, the liquid in the upper chamber 21, the deformable light-transmitting membrane 1, the liquid in the lower chamber 21, and the second light-transmitting portion 32 along the first direction, and is then converged or diverged.

The first light-transmitting portion 31 and the second light-transmitting portion 32 may be constructed in different manners. For example, a central axis of the deformable light-transmitting membrane 1 may be parallel to the first direction. In this case, the first light-transmitting portion 31 and the second light-transmitting portion 32 may optionally be constructed to be perpendicular or not perpendicular to the first direction. Alternatively, a central axis of the deformable light-transmitting membrane 1 may be non-parallel to the first direction. In this case, the first light-transmitting portion 31 and the second light-transmitting portion 32 may also be perpendicular or not perpendicular to the first direction. The central axis of the deformable light-transmitting membrane 1 herein may be understood as an axis that passes through a center of the deformable light-transmitting membrane 1 and is perpendicular to the deformable light-transmitting membrane 1 when the deformable light-transmitting membrane 1 is in a flat state (when no upward convex deformation or downward concave deformation occurs). Therefore, the first light-transmitting portion 31 and the second light-transmitting portion 32 are configured in different manners to cooperate with the deformable light-transmitting membrane 1 for adjusting the optical path of light. The present disclosure is not limited thereto.

The through hole 22 may be optionally provided in the housing 2. For example, in some embodiments, refer to FIG. 1 to FIG. 4. The housing 2 includes a first plate body 23, a second plate body 24, and a third plate body 25 located between the first plate body 23 and the second plate body 24. A first sealing member 26 is disposed between the first plate body 23 and the third plate body 25, and a second sealing member 27 is disposed between the second plate body 24 and the third plate body 25. One of the chambers 21 is enclosed by the first plate body 23, the third plate body 25, and the first sealing member 26, and another chamber 21 is enclosed by the second plate body 24, the third plate body 25, and the second sealing member 27. The first light-transmitting portion 31 is disposed on the first plate body 23, the second light-transmitting portion 32 is disposed on the second plate body 24, and the deformable light-transmitting membrane 1 is disposed on the third plate body 25. Each of the first sealing member 26 and the second sealing member 27 is provided with at least one through hole 22.

There may be one or more third plate bodies 25. For example, when there is one third plate body 25, the optical apparatus includes two chambers 21. When there are a plurality of third plate bodies 25, a third sealing member (not shown in the figure) may be disposed between two adjacent third plate bodies 25. The third sealing member and the two adjacent third plate bodies 25 may enclose the chamber 21. For example, when there are two third plate bodies 25, the optical apparatus may include three chambers 21, and when there are three third plate bodies 25, the optical apparatus may include four chambers 21. This is not specifically limited in the present disclosure.

Specifically, the first sealing member 26 and the second sealing member 27 may be constructed as hollow cylindrical plate bodies, to form space therein for containing liquid. The first plate body 23, the second plate body 24, the third plate body 25, the first sealing member 26, and the second sealing member 27 may be made of, for example, ABS, PS, or PE. Meanwhile, a reserved groove may be formed on the plate body for insertion or embedding of an adjacent sealing member, so that the sealing member can cooperate with the plate body to achieve better sealing of the chamber 21.

In some embodiments, as shown in FIG. 1 and FIG. 2, a first light-transmitting hole 231 is provided in the first plate body 23, and the first light-transmitting portion 31 is constructed as a first optical lens 311 covering the first light-transmitting hole 231; and/or a second light-transmitting hole 241 is provided in the second plate body 24, and the second light-transmitting portion 32 is constructed as a second optical lens 321 covering the second light-transmitting hole 241. The first optical lens 311 and the second optical lens 321 may be made of a same or different materials. Specifically, the first optical lens 311 and the second optical lens 321 may be made of optical materials, for example, glass or plastic. In this way, light sequentially passes through the first optical lens 311, the liquid in the upper chamber 21, the deformable light-transmitting membrane 1, the liquid in the lower chamber 21, and the second optical lens 321 along the first direction, and is then converged or diverged. In addition, a reserved groove for embedding the first optical lens 311 is formed on the first plate body 23, and similarly, a reserved groove for embedding the second optical lens 321 is formed on the second plate body 24. The first optical lens 311 and the second optical lens 321 may be fastened in the corresponding reserved grooves by bonding.

It should be noted that a clear aperture can be adjusted by changing inner diameters of the first light-transmitting hole 231 and the second light-transmitting hole 241. Therefore, in some other possible embodiments not shown in the accompanying drawings, the first plate body 23 and the first optical lens 311, as well as the second plate body 24 and the second optical lens 321 may be constructed as an integrated modular structure. That is, when the clear aperture needs to be adjusted, the first plate body 23 and the first optical lens 311, as well as the second plate body 24 and the second optical lens 321 can be replaced as a whole, so that it is not necessary to detach the first optical lens 311 and the second optical lens 321 from the first plate body 23 and the second plate body 24 and to reinstall them on a first plate body 23 having a first light-transmitting hole 231 of a different size and a second plate body 24 having a second light-transmitting hole 241 of a different size respectively. It may be understood that the inner diameters of the first light-transmitting hole 231 and the second light-transmitting hole 241 may be an aperture of the optical apparatus or a lens including the optical apparatus. For example, compared with the related technologies, the lens provided in the present disclosure can achieve precise zooming of a large-aperture lens. For example, a radial dimension of the first light-transmitting hole 231 and/or the second light-transmitting hole 241 may be not less than 30 mm. That is, the lens provided in the present disclosure can achieve precise zooming of large-aperture lenses of 30 mm or more, for example, can achieve precise zooming of lenses with apertures of 50 mm, 100 mm, 150 mm, 200 mm, 250 mm, 300 mm, 350 mm, 400 mm, 450 mm, 500 mm, and the like.

In some embodiments, a length of at least one of the first sealing member 26 and the second sealing member 27 along the first direction is not less than one-fifth of a diameter of the deformable light-transmitting membrane 1. In this way, the length of the first sealing member 26 and the second sealing member 27 along the first direction is ensured, so that the deformable light-transmitting membrane 1 may have large deformation space in the chamber 21, thereby widening a zoom range of the lens.

In some embodiments, as shown in FIG. 1 and FIG. 2, the first plate body 23 and the second plate body 24 are connected via a connection assembly 5, so that the third plate body 25, the first sealing member 26, and the second sealing member 27 are capable of being clamped between the first plate body 23 and the second plate body 24. It may be understood that the connection assembly 5 can connect the first plate body 23 and the second plate body 24 to clamp and fasten the third plate body 25, the first sealing member 26, the second sealing member 27, and the third sealing member (if any) between the first plate body 23 and the second plate body 24.

In some embodiments, as shown in FIG. 1 and FIG. 2, the connection assembly 5 includes a plurality of clamping members 51 spaced circumferentially about the first plate body 23 or the second plate body 24, the clamping members 51 are connected to both the first plate body 23 and the second plate body 24, and the clamping members 51 optionally penetrate the third plate body 25. Specifically, the clamping member 51 may be constructed in any suitable manner. For example, the clamping member 51 may be constructed as a fastening bolt and a fastening nut. The fastening bolt may pass through the first plate body 23 and the second plate body 24, and then the fastening nut may be threadedly locked onto the corresponding fastening bolt. It may be understood that the fastening bolt may pass through the third plate body 25, to restrict movement of the third plate body 25. Alternatively, the fastening bolt may not pass through the third plate body 25, and a reserved groove for embedding an adjacent sealing member may be formed on the third plate body 25 correspondingly, to restrict movement of the third plate body 25.

In some other possible embodiments not shown in the accompanying drawings, the clamping member 51 may alternatively include support rods disposed between the first plate body 23 and the second plate body 24. The plurality of support rods may be connected to the first plate body 23 and the second plate body 24 by bonding or snap-fitting. Similarly, the support rods may or may not pass through the third plate body 25. This is not limited in the present disclosure.

According to a second aspect of the present disclosure, a lens is provided, including the foregoing optical apparatus and liquid filled in the chambers 21 of the optical apparatus. The lens has all the beneficial effects of the foregoing optical apparatus. For example, the lens can improve the stability of the optical axis during use, enable precise focusing, and be applicable to large-aperture lenses. Details are not described herein again in the present disclosure.

In some embodiments, the liquid in each of the chambers 21 has a same density. In this way, when the lens is placed in a non-vertical orientation, the liquid in the chambers 21 does not flow significantly under the influence of gravity, and therefore is not prone to pressing against the deformable light-transmitting membrane 1, which would otherwise affect a surface profile of the deformable light-transmitting membrane 1. The optical axis remains stable, resulting in good imaging effect and imaging stability. The term "surface profile" used in the present disclosure refers to an upward convex, downward concave, or flat shape of the deformable light-transmitting membrane 1 after the amount of liquid in each chamber 21 is adjusted by the control structure 4.

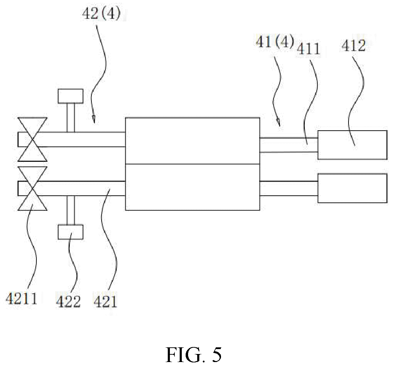

According to a third aspect of the present disclosure, a lens adjustment system is provided, as shown in FIG. 5, including the lens and the control structure 4. In some embodiments, the control structure 4 includes a liquid amount control assembly 41 and a pressure detection assembly 42 that are in communication with each of the chambers 21. The liquid amount control assembly 41 is configured to adjust an amount of liquid in each of the chambers 21, to adjust a radius of curvature of the deformable light-transmitting membrane 1. The pressure detection assembly 42 is configured to detect a pressure in each of the chambers 21 for the liquid amount control assembly 41 to adjust the amount of liquid in each of the chambers 21. In this way, the liquid amount control assembly 41 is configured to add or reduce the amount of liquid in each of the chambers 21, thereby causing the deformable light-transmitting membrane 1 to deform. Meanwhile, when the liquid amount control assembly 41 adds or reduces the amount of liquid in the chambers 21, the pressure detection assembly 42 detects the pressure in each of the chambers 21. Specifically, the lens may be calibrated before use. For example, first, a specific amount of corresponding liquid is added to or reduced from each of the chambers 21 by the liquid amount control assembly 41, and a pressure value in each of the chambers 21 is recorded by using the pressure detection assembly 42. Based on this, pressure value differences between different chambers 21, for example, between two adjacent chambers 21, are obtained, and a measured focal length value is recorded at the same time. Then, the amount of liquid added or reduced is changed, and the above recording process is repeated to complete the recording of data on pressure value differences in different chambers 21 and focal length values when different amounts of liquid are added or reduced. Accordingly, a relationship between a pressure value difference and a focal length value is established, thereby completing calibration of the lens, so that the surface profile of the deformable light-transmitting membrane 1 can be determined based on the pressure value difference. Then, during use of the lens, after a desired focal length value is determined, a specific amount of corresponding liquid is added to or reduced from each of the chambers 21 by the liquid amount control assembly 41. When the pressure detection assembly 42 detects that the pressure value in the corresponding chamber 21 or the pressure value difference between different chambers 21 reaches a pressure value or pressure difference corresponding to the focal length value as established during calibration, the addition or reduction of liquid is stopped. At this time, the focal length value of the lens is adjusted to meet a use requirement, and the lens can be used normally.

In some embodiments, as shown in FIG. 5, the liquid amount control assembly 41 includes a liquid flow line 411 and a pumping apparatus 412. Each of the chambers 21 is in communication with a respective liquid flow line 411. Each of the liquid flow lines 411 may be in communication with a respective pumping apparatus 412, for example, the pumping apparatus 412 may be a mechanical peristaltic pump. Alternatively, each of the liquid flow lines 411 may be in communication with the same pumping apparatus 412, for example, the pumping apparatus 412 may be a syringe pump. The syringe pump includes a plurality of syringes, and each of the chambers 21 may be in communication with one syringe through one liquid flow line 411. In this way, the pumping apparatus 412 may pump liquid into or out of the chambers 21 through the liquid flow lines 411, and the pumping of liquid into or out of different chambers 21 does not interfere with each other. It may be understood that, for example, when the deformable light-transmitting membrane 1 needs to undergo upward convex deformation to form a positive lens, the pumping apparatus 412 that is in communication with the lower chamber 21 is turned on and pumps liquid into the lower chamber 21 through the liquid flow line 411. At this time, the pumping apparatus 412 that is in communication with the upper chamber 21 is turned on and pumps liquid out of the upper chamber 21 through the liquid flow line 411. The liquid flow line 411 may be, for example, a rubber hose, and the pumping apparatus 412 may be, for example, a mechanical peristaltic pump or a syringe pump.

In some embodiments, as shown in FIG. 5, each of the chambers 21 may be in communication with a vent line 421. The vent line 421 may be configured to discharge gas from the chamber 21 when liquid is injected into the chamber 21.

The pressure detection assembly 42 includes a plurality of pressure detection apparatuses 422. The pressure detection apparatus 422 is disposed on the vent line 421 or the liquid flow line 411, to detect a pressure value in the chamber 21 via the pressure detection apparatus 422. In addition, a vent valve 4211 is disposed on the vent line 421. In an example in which the pressure detection apparatus 422 is disposed on the vent line 421, the pressure detection apparatus 422 is in communication with the vent line 421 at a location between the vent valve 4211 and the chamber 21. When liquid is filled for the first time, the vent valve 4211 on the vent line 421 may be opened first, and then liquid is added to each of the chambers 21 by the liquid amount control assembly 41. After the chambers are filled with liquid, the vent valve 4211 is closed, and the liquid injection process of the liquid amount control assembly 41 is stopped at the same time.

After the liquid filling is completed, the lens needs to be calibrated. First, a specific amount of corresponding liquid is added to or reduced from each of the chambers 21 by the liquid amount control assembly 41, and a pressure value in each of the chambers 21 and pressure value differences between different chambers 21 are recorded by the pressure detection apparatus 422, and a measured focal length value is recorded at the same time. Then, the amount of liquid added or reduced is changed, and the above recording process is repeated to complete the recording of data on pressure value differences in different chambers 21 and focal length values when different amounts of liquid are added or reduced. Accordingly, a relationship between a pressure value difference and a focal length value is established, thereby completing calibration of the lens, so that the surface profile of the deformable light-transmitting membrane 1 can be determined based on the pressure value difference. Then, during use of the lens, after a desired focal length value is determined, a specific amount of corresponding liquid is added to or reduced from each of the chambers 21 by the liquid amount control assembly 41. When the pressure detection apparatus 422 detects that the pressure value difference between different chambers 21 reaches a pressure value difference corresponding to the focal length value as established during calibration or a pressure value difference calculated from calibration data, the addition or reduction of liquid is stopped. At this time, the focal length value of the lens is adjusted to meet a use requirement, and the lens can be used normally. The vent line 421 may be, for example, a rubber hose, and the pressure detection apparatus 422 may be, for example, a pressure gauge.

In addition, it should be noted that the vent valve 4211 is opened during the liquid filling process to discharge gas inside the chamber, the liquid flow line 411 and the vent line 421. After venting is completed, the vent valve 4211 is maintained in a normally closed state during lens calibration and subsequent lens use.

The present disclosure exemplarily illustrates the installation and use process of the optical apparatus, the lens, and the lens adjustment system.

First, the first plate body 23, the first sealing member 26, the third plate body 25, the second sealing member 27, and the second plate body 24 are sequentially arranged. Then, the fastening bolts sequentially pass through the second plate body 24, the third plate body 25, and the first plate body 23, and are threadedly locked by the fastening nuts, to complete installation of the optical apparatus. Then, the liquid flow lines 411 and the vent lines 421 are in communication with the corresponding chambers 21 via the through holes 22.

Thereafter, liquid filling is performed. The vent valve 4211 is opened, and liquid is pumped into the corresponding chamber 21 by the pumping apparatus 412 through the liquid flow line 411. After the chamber is filled with liquid, the vent valve 4211 is closed. Then, the lens is calibrated. Liquid is pumped into one of the chambers 21 to increase a specific amount, while at the same time, liquid is pumped out of another chamber 21 by the same amount. Pressure values in the two chambers 21 and a difference therebetween are recorded by the pressure detection apparatus 422, and a measured focal length value is recorded at the same time. Then, the amount of liquid pumped in and pumped out is changed, and the above recording process is repeated to complete the recording of data on pressure value differences in the two chambers 21 and focal length values when different amounts of liquid are pumped in and pumped out. Accordingly, a relationship between a pressure value difference and a focal length value is established, thereby completing calibration of the lens, so that the surface profile of the deformable light-transmitting membrane 1 can be determined based on the pressure value difference.

When the lens is used and the deformable light-transmitting membrane 1 needs to undergo upward convex deformation to form a positive lens, the pumping apparatus 412 that is in communication with the lower chamber 21 is turned on and pumps liquid into the lower chamber 21 through the liquid flow line 411. At the same time, the pumping apparatus 412 that is in communication with the upper chamber 21 pumps liquid out of the upper chamber 21 through the liquid flow line 411 by the same amount until the positive lens formed by the upward convex deformation of the deformable light-transmitting membrane 1 meets the focal length adjustment requirement.

When the deformable light-transmitting membrane 1 needs to undergo downward concave deformation to form a negative lens, the pumping apparatus 412 that is in communication with the upper chamber 21 is turned on and pumps liquid into the upper chamber 21 through the liquid flow line 411. At the same time, the pumping apparatus 412 that is in communication with the lower chamber 21 pumps liquid out of the lower chamber 21 through the liquid flow line 411 by the same amount until the negative lens formed by the downward concave deformation of the deformable light-transmitting membrane 1 meets the focal length adjustment requirement.

In addition, the present disclosure exemplarily illustrates some specific structural parameters and focal length adjustment ranges of the lens.

Example 1: Diameters of the first light-transmitting hole 231 and the second light-transmitting hole 241 are both 50 mm. Lengths of the first sealing member 26 and the second sealing member 27 along the first direction are 50 mm. The deformable light-transmitting membrane 1 has a thickness of 1 mm and is made of PDMS, with a refractive index of 1.411 and an Abbe number of 40.0. The upper liquid is an aqueous solution of NaCl with a refractive index of 1.33 and an Abbe number of 55.8. The lower liquid is colorless transparent silicone oil with a refractive index of 1.65 and an Abbe number of 62.8. Through calculation, a shortest negative focal length of the lens is -75.5 mm, and a shortest positive focal length of the lens is 75.8 mm.

Example 2: Diameters of the first light-transmitting hole 231 and the second light-transmitting hole 241 are both 100 mm. Lengths of the first sealing member 26 and the second sealing member 27 along the first direction are 100 mm. The deformable light-transmitting membrane 1 has a thickness of 1 mm and is made of PDMS, with a refractive index of 1.411 and an Abbe number of 40.0. The upper liquid is an aqueous solution of NaCl with a refractive index of 1.33 and an Abbe number of 55.8. The lower liquid is colorless transparent silicone oil with a refractive index of 1.65 and an Abbe number of 62.8. Through calculation, a shortest negative focal length of the lens is -151.2 mm, and a shortest positive focal length of the lens is 151.5 mm.

Example 3: Diameters of the first light-transmitting hole 231 and the second light-transmitting hole 241 are both 200 mm. Lengths of the first sealing member 26 and the second sealing member 27 along the first direction are 200 mm. The deformable light-transmitting membrane 1 has a thickness of 1 mm and is made of PDMS, with a refractive index of 1.411 and an Abbe number of 40.0. The upper liquid is an aqueous solution of NaCl with a refractive index of 1.33 and an Abbe number of 55.8. The lower liquid is colorless transparent silicone oil with a refractive index of 1.65 and an Abbe number of 62.8. Through calculation, a shortest negative focal length of the lens is -302.5 mm, and a shortest positive focal length of the lens is 302.8 mm.

Preferred implementations of the present disclosure are described above in detail with reference to the accompanying drawings. However, the present disclosure is not limited to details in the foregoing implementations. Within the scope of the technical concept of the present disclosure, a plurality of simple variations may be made to the technical solutions of the present disclosure, and all these simple variations fall within the protection scope of the present disclosure.

In addition, it should be noted that the specific technical features described in the foregoing specific implementations may be combined in any proper manner if there is no conflict. To avoid unnecessary repetition, various possible combinations are not further described in the present disclosure.

In addition, any combination of various different implementations of the present disclosure may be employed, and such combination shall also be considered as the content disclosed in the present disclosure, provided that the combination does not depart from the idea of the present disclosure.

## Claims

1. An optical apparatus, comprising:
a deformable light-transmitting membrane (1);
a housing (2); and
a light-transmitting structure (3) disposed on the housing (2), wherein the deformable light-transmitting membrane (1), the housing (2), and the light-transmitting structure (3) form at least two chambers (21) suitable for containing liquid, the deformable light-transmitting membrane (1) is disposed between two adjacent chambers (21), the light-transmitting structure (3) and the deformable light-transmitting membrane (1) jointly form an optical path for light to pass through, two adjacent chambers (21) are suitable for containing liquids with different refractive indices, each chamber (21) is provided with at least one through hole (22), and the through hole (22) is suitable for being in communication with a control structure (4) to change an amount of liquid in the chamber (21).

2. The optical apparatus according to claim 1, wherein the at least two chambers (21) are sequentially arranged along a first direction, the light-transmitting structure (3) comprises a first light-transmitting portion (31) located at a first end of the housing (2) along the first direction and a second light-transmitting portion (32) located at a second end opposite to the first end, the first direction is perpendicular to the first light-transmitting portion (31) or the second light-transmitting portion (32), and a central axis of the deformable light-transmitting membrane (1) is parallel to the first direction.

3. The optical apparatus according to claim 2, wherein the housing (2) comprises a first plate body (23), a second plate body (24), and a third plate body (25) located between the first plate body (23) and the second plate body (24), a first sealing member (26) is disposed between the first plate body (23) and the third plate body (25), a second sealing member (27) is disposed between the second plate body (24) and the third plate body (25), one of the chambers (21) is enclosed by the first plate body (23), the third plate body (25), and the first sealing member (26), another chamber (21) is enclosed by the second plate body (24), the third plate body (25), and the second sealing member (27), the first light-transmitting portion (31) is disposed on the first plate body (23), the second light-transmitting portion (32) is disposed on the second plate body (24), the deformable light-transmitting membrane (1) is disposed on the third plate body (25), and each of the first sealing member (26) and the second sealing member (27) is provided with at least one through hole (22).

4. The optical apparatus according to claim 3, wherein a first light-transmitting hole (231) is provided in the first plate body (23), and the first light-transmitting portion (31) is constructed as a first optical lens (311) covering the first light-transmitting hole (231); and/or a second light-transmitting hole (241) is provided in the second plate body (24), and the second light-transmitting portion (32) is constructed as a second optical lens (321) covering the second light-transmitting hole (241).

5. The optical apparatus according to claim 4, wherein a radial dimension of the first light-transmitting hole (231) and/or the second light-transmitting hole (241) is not less than 30 mm.

6. The optical apparatus according to claim 4 or 5, wherein a length of at least one of the first sealing member (26) and the second sealing member (27) along the first direction is not less than one-fifth of a diameter of the deformable light-transmitting membrane (1).

7. The optical apparatus according to any one of claims 3 to 6, wherein the first plate body (23) and the second plate body (24) are connected via a connection assembly (5), so that the third plate body (25), the first sealing member (26), and the second sealing member (27) are capable of being clamped between the first plate body (23) and the second plate body (24).

8. The optical apparatus according to claim 7, wherein the connection assembly (5) comprises a plurality of clamping members (51) spaced circumferentially about the first plate body (23) or the second plate body (24), the clamping members (51) are connected to both the first plate body (23) and the second plate body (24), and the clamping members (51) optionally penetrate the third plate body (25).

9. The optical apparatus according to any one of claims 1 to 8, wherein the through hole (22) is provided in the housing (2).

10. A lens, comprising the optical apparatus according to any one of claims 1 to 9 and liquid filled in the chambers (21).

11. The lens according to claim 10, wherein the liquid in each of the chambers (21) has a same density.

12. A lens adjustment system, comprising the lens according to claim 10 or 11 and the control structure (4).

13. The lens adjustment system according to claim 12, wherein the control structure (4) comprises a liquid amount control assembly (41) and a pressure detection assembly (42) that are in communication with each of the chambers (21), the liquid amount control assembly (41) is configured to adjust an amount of liquid in each of the chambers (21), to adjust a radius of curvature of the deformable light-transmitting membrane (1), the pressure detection assembly (42) is configured to detect a pressure in each of the chambers (21) for the liquid amount control assembly (41) to adjust the amount of liquid in each of the chambers (21).

14. The lens adjustment system according to claim 13, wherein the liquid amount control assembly (41) comprises a liquid flow line (411) and a pumping apparatus (412), each of the chambers (21) is in communication with a respective liquid flow line (411), and each of the liquid flow lines (411) is in communication with a respective pumping apparatus (412), or each of the liquid flow lines (411) is in communication with the same pumping apparatus.

15. The lens adjustment system according to claim 14, wherein each of the chambers (21) is in communication with a respective vent line (421), the pressure detection assembly (42) comprises a plurality of pressure detection apparatuses (422), and the pressure detection apparatus (422) is disposed on the vent line (421) or the liquid flow line (411).

16. The lens adjustment system according to claim 15, wherein a vent valve (4211) is disposed on the vent line (421).
